# EUROPÄISCHE PATENTSCHRIFT

(11) **EP 1 957 244 B1**
(45) Veröffentlichungstag und Bekanntmachung des Hinweises auf die Patenterteilung: **15.04.2009**
(21) Anmeldenummer: 06794004.9
(22) Anmeldetag: 10.10.2006
(51) Int. Cl.: B25J 15/00, B25J 15/02, B25B 5/06

(54) **HANDLINGSYSTEM FÜR FORMVERWANDTE BAUTEILE, INSBESONDERE KAROSSERIEBAUTEILE FÜR KRAFTFAHRZEUGE**
HANDLING SYSTEM FOR COMPONENTS HAVING SIMILAR SHAPES, PARTICULARLY BODY COMPONENTS FOR MOTOR VEHICLES
SYSTEME DE MANIPULATION POUR PIECES DE FORME SIMILAIRE, EN PARTICULIER DES PIECES DE CARROSSERIE POUR VEHICULES AUTOMOBILES

(30) Priorität: 13.10.2005 DE 102005049494; 02.06.2006 DE 102006025844
(43) Veröffentlichungstag der Anmeldung: 20.08.2008
(73) Patentinhaber: ThyssenKrupp Drauz Nothelfer GmbH, 74076 Heilbronn (DE)
(72) Erfinder: KIPPING, Tino, 66839 Schmelz (DE); KIPPING, Josef, 66839 Schmelz (DE); KNAPP, Ulrich, 66540 Neunkirchen (DE)
(74) Vertreter: Cohausz & Florack
(86) Internationale Anmeldenummer: PCT/EP2006/067246
(87) Internationale Veröffentlichungsnummer: WO 2007/042518

(56) Entgegenhaltungen:
- EP-A1- 0 115 544
- DE-A1- 19 518 062
- DE-U1- 20 017 129

## Beschreibung

Die Erfindung betrifft ein Handlingsystem für formverwandte Bauteile, insbesondere Karosseriebauteile für Kraftfahrzeuge, bei dem ein Greifer am Arm eines Roboters mit mehreren, den Bauteilen angepasste Konturstücke aufweisenden Spannvorrichtungen bestückt ist, mit denen das jeweilige Bauteil an räumlich gegeneinander versetzten Stellen greifbar ist.

Beim Karosseriebau von Kraftfahrzeugen werden bekannte Handlingsysteme (DE 202 19 713 U1) eingesetzt, bei denen mittels eines Greifers am Arm eines Roboters das zu handlende Bauteil, z.B. eine Kraftfahrzeugtür erfasst wird und passgenau an die Stelle der Karosseriestruktur gebracht wird, wo sie angebaut werden soll. Zur sicheren und präzisen Erfassung des Bauteils ist der Greifer mit mehreren Spannvorrichtungen bestückt, die ihrerseits jeweils eine Spannzange aufweisen, die mit dem Bauteil angepassten Konturstücken das Bauteil an mehreren räumlich versetzten Stellen erfassen. Voraussetzung für das positionsgerechte Greifen ist, dass für jeden Bauteiltyp die Spannvorrichtungen am Greifer entsprechend positioniert und mit passenden Konturstücken bestückt werden. Ein solches Handlingsystem ist aus dem Dokument DE 20017129 U bekannt. Eine solche Einrichtung und Umrüstung der Greifer ist auch erforderlich, wenn formverwandte Bauteile gehandled werden sollen. Unter "formverwandt" werden Bauteile verstanden, die an mehreren Stellen zwar deckungsgleich sind, sich aber in der Höhenlage voneinander unterscheiden. Alternativ könnte für einen anderen Bauteiltyp auch ein weiteres entsprechend eingerichtetes Handlingsystem eingesetzt werden, was allerdings mit einer wesentlichen Erhöhung des vorrichtungstechnischen Aufwandes verbunden wäre.

Um Spannzangen von Handlingsystemen zu öffnen und zu schließen, sind mechanische Antriebe bekannt (US 6 428 071 B2), die einen Zahnstangenantrieb aufweisen. Die antreibende Zahnstange ist als Teil einer hydraulisch beaufschlagbaren Zylinder-Kolben-Anordnung ausgebildet und über ein festes Ritzel mit den beweglichen Spannbacken der Spannzange gekuppelt.

Der Erfindung liegt die Aufgabe zugrunde, ein Handlingsystem für formverwandte Bauteile, insbesondere Karosseriebauteile für Kraftfahrzeuge zu schaffen, bei dem mit ein und demselben Greifer ohne aufwendige Umrüstung und Einrichtung diese Bauteile gehandled werden können.

Diese Aufgabe wird mit einem Handlingsystem der eingangs genannten Art dadurch gelöst, dass jede Spannvorrichtung zwei Spannzangen aufweist, deren Spannbacken aus einer Ruheposition in eine Greifposition verschwenkbar sind, wobei die Spannbacken der einen Spannzange in ihrer Ruheposition gehalten werden, wenn die Spannbacken der anderen Spannzange in ihre Greifposition verschwenkt werden und umgekehrt.

Die Erfindung geht von der Erkenntnis aus, dass es bei formverwandten Bauteilen Stellen gibt, die zwar nicht von derselben Spannzange mit denselben Konturstücken, wohl aber von der anderen Spannzange mit anderen Konturstücken ergriffen werden können. Voraussetzung ist allerdings, dass das Ergreifen des Bauteils durch die eine Spannzange nicht durch die störend im Weg liegenden Spannbacken der' anderen Spannzange behindert wird. Erfindungsgemäß ist dies durch die wechselseitige Verriegelung der Spannzangen in der außerhalb der Greifbewegung der jeweils anderen Spannzange liegenden Ruheposition gewährleistet.

Um einen Greifer auf die formverwandten Bauteile einzurichten, ist nach einer Ausgestaltung der Erfindung vorgesehen, dass die Spannvorrichtungen von in der Länge angepassten Tragarmen des Greifers gehalten sind. Durch Verschwenken und Längseinstellen der Tragarme lässt sich jede Spannvorrichtung auf die deckungsgleichen Bereiche der formverwandten Bauteile einstellen, an denen die Bauteile ergriffen werden sollen. Die Spannbackenpaare einer jeden Spannvorrichtung werden dann jeweils mit den passenden Konturstücken für die beiden formverwandten Bauteile bestückt. So lassen sich auch unterschiedliche Höhenlagen ausgleichen.

Vorzugsweise weisen die Spannzangen einer jeden Spannvorrichtung jeweils einen Zahnstangen umfassenden Antrieb auf. Die Zahnstangen von zwei nebeneinander angeordneten Spannzangen derselben Spannvorrichtung sind vorzugsweise abwechselnd an denselben Mitnehmern des Antriebes kuppelbar. Der Mitnehmer selbst wird von einem Kurbelschwingengetriebe angetrieben.
Nach einer alternativen Ausgestaltung des Antriebs der Spannzangen können die Spannbacken der beiden Spannzangen auf gemeinsamen Lagerzapfen verschwenk- und axial verschiebbar und mit Antriebsritzeln abdeckend an eine gemeinsame angetriebene Zahnstange kuppelbar sein.

Die besonderen Vorteile dieses anderen Antriebs bestehen in dem einfacher gestalteten Antrieb, der mit einer einzigen Zahnstange für beide Spannzangen auskommt. Ein weiterer Vorteil besteht darin, dass für beide Spannzangen dieselbe Betriebsstellung vorgesehen ist.

Um die Spannbacken der einen Spannzange aus ihrer Parkposition in die Betriebsstellung und die in Betriebsstellung befindlichen Spannbacken der anderen Spannzange in ihre Parkposition zu bringen und umgekehrt, sind die Spannbacken an einem gemeinsamen Verschiebeantrieb gekuppelt. Der Verschiebeantrieb kann ein parallel zu den Lagerzapfen verschiebbar gelagertes und von einem Stellmotor angetriebenes Stellglied aufweisen, das über Mitnehmer mit den Spannbacken verbunden ist. Vorzugsweise ist der Stellmotor eine beidseitig mit einem Druckmittel beaufschlagbare Zylinder-Kolben-Anordnung, an deren Kolbenstange das Stellglied angeschlossen ist. Die Mitnehmer können Stifte sein, die in koaxialen Ringnuten der Antriebsritzel der Spannbacken eingreifen.

Da bei der Erfindung für beide Spannzangen dieselbe Betriebsstellung vorgesehen ist, gestaltet sich auch die Führung der gerade aktiven Spannzange und die Arretierung der inaktiven Spannzange einfach, indem für die Spannbacken jeder aktiven Spannzange, deren Antriebsritzel gerade mit der Zahnstange in Eingriff stehen, bei ihrer Verschwenkbewegung wirksame, beidseitige Führungsflanken vorgesehen sind, und indem für die Spannbacken jeder dann inaktiven Spannzange, deren Antriebsritzel dann nicht mit der Zahnstange in Eingriff stehen, seitliche Haltetaschen vorgesehen sind.

Da nur eine gemeinsame Zahnstange für beide Spannzangen vorgesehen ist, kann die Zahnstange ständig mit dem Antrieb gekuppelt sein. Nach einer Ausgestaltung der Erfindung ist sie über ein Ritzel und einen damit gekuppelten Kniehebel mit der Kolbenstange einer Zylinderkolbenanordnung antriebsmäßig verbunden.

Im Folgenden wird die Erfindung anhand einer zwei Ausführungsbeispiele darstellenden Zeichnung näher beschrieben. Im einzelnen zeigen:
- Fig. 1: Konturen von zwei formverwandten Bauteilen, und zwar einer vorderen und einer hinteren Tür einer Kfz.-Karosserie nebeneinander,
- Fig. 2: die Konturen der formverwandten Bauteile der Fig. 1 übereinander,
- Fig. 3: ein Handlingsystem mit einem Greifer in Seitenansicht,
- Fig. 4: den Greifer des Handlingsystems aus der Sicht des Pfeiles Z der Fig. 3 mit mehreren auf die deckungsgleichen Konturen der vorderen und hinteren Tür eingerichteten Spannvorrichtungen,

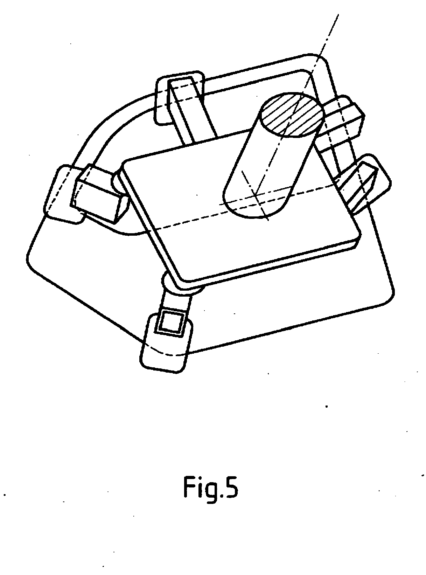

- Fig. 5: den Greifer der Fig. 3 und 4 in perspektivischer Darstellung,
- Fig. 6: eine der Spannvorrichtung des Greifers nach Fig. 3 in ihrem konstruktiven Aufbau in perspektivischer Darstellung, wobei eine Hälfte ihres zweischaligen Gehäuses abgenommen ist,
- Fig. 7: ein Detail der Spannvorrichtung der Fig. 6, und zwar eine Spannzange mit ihrem Antrieb in perspektivischer Darstellung,
- Fig. 8: ein Detail der Spannzange der Fig. 7 in schematisch vereinfachter Darstellung,
- Fig. 9: eine der Spannvorrichtungen der Fig. 3 in einer zu Fig. 6 bis 8 alternativen Ausführung in perspektivischer Darstellung, wobei eine Seite ihres zweischaligen Gehäuses abgenommen ist,
- Fig. 10: die Spannvorrichtung gemäß Fig. 9 in Seitenansicht,
- Fig. 11: die Spannvorrichtung gemäß Fig. 10 im Teilschnitt nach Linie I-I,
- Fig. 12: die Spannvorrichtung gemäß Fig. 10 im Teilschnitt nach Linie II-II der Fig. 10.

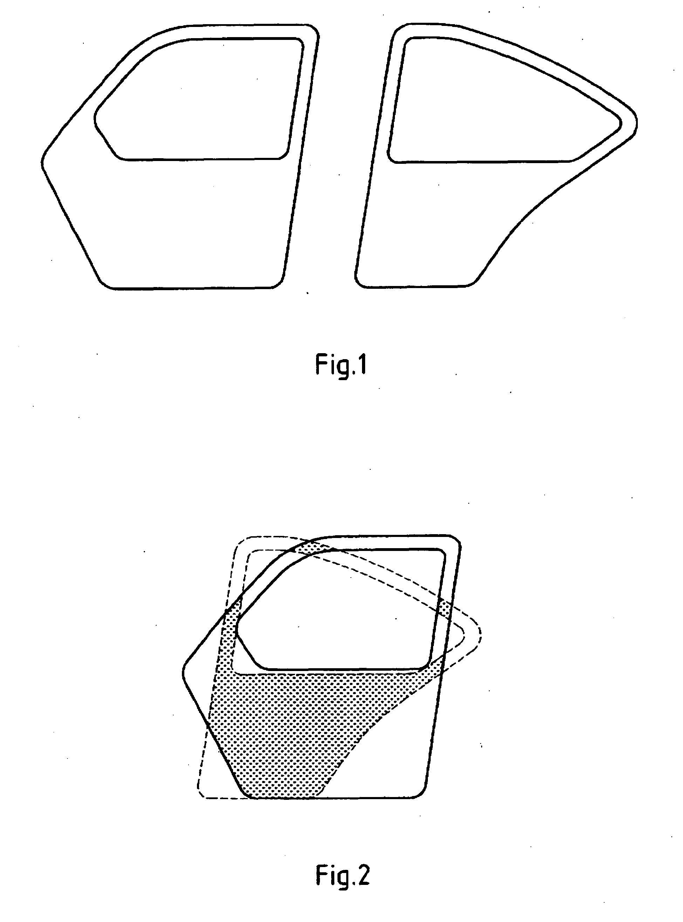

In Fig. 1 ist links die Kontur eines ersten Bauteils, und zwar einer vorderen Tür eines Kraftfahrzeuges, und rechts die Kontur eines formverwandten zweiten Bauteils, und zwar der hinteren Tür, dargestellt. In Fig. 2 sind die beiden Konturen übereinander gezeichnet. In dieser Darstellung sind die deckungsgleichen Bereiche punktiert dargestellt. Diese deckungsgleichen Bereiche eignen sich zum Ergreifen des Bauteils mit ein und derselben Spannvorrichtung.

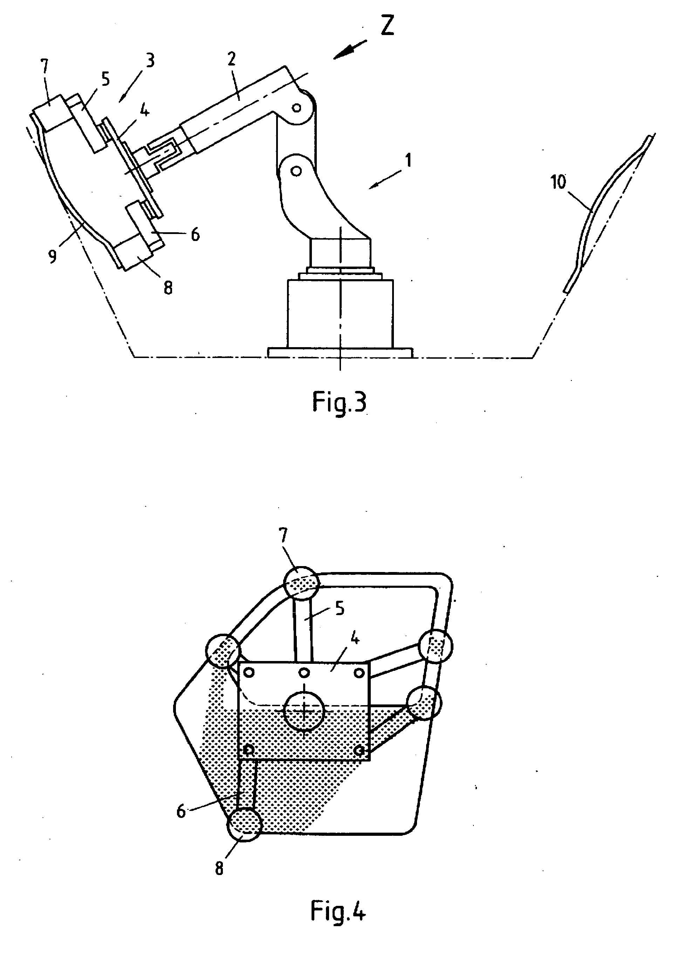

Das in Fig. 3 dargestellte Handlingsystem weist einen Roboter 1 auf, der an seinem Arm 2 einen Greifer 3 trägt. Dieser Greifer 3 kann vom Roboter 1 im Raum um eine Vielzahl von Achsen bewegt werden. Der Greifer 3 weist eine Basis 4 mit darauf verschwenkbar angeordneten und in ihrer Länge angepassten Armen 5, 6 auf, die an ihrem Ende jeweils eine Spannvorrichtung 7, 8 tragen. Die Positionierung der Spannvorrichtungen 7, 8 erfolgt entsprechend Fig. 4 auf die nochmals punktiert gekennzeichnet deckungsgleichen Bereiche der zu handlenden formverwandten Bauteile. Mit dieser Positionierung ist es möglich, die in Fig. 3 links dargestellte vordere Tür 9, aber auch die rechts dargestellte hintere Tür 10, zu erfassen, obwohl die hintere Tür 10 auch in den deckungsgleichen Bereichen eine andere Höhenlage hat als die vordere Tür 9. Die unterschiedliche Höhenlage und Kontur der Bauteile in den zu erfassenden Bereichen wird durch besondere Konturstücke ausgeglichen. Dabei kann der Greifer 3 die Bauteile sowohl von deren konkaver Seite (Bauteil 9) als auch von deren konvexer Seite (Bauteil 10) aus ergreifen.

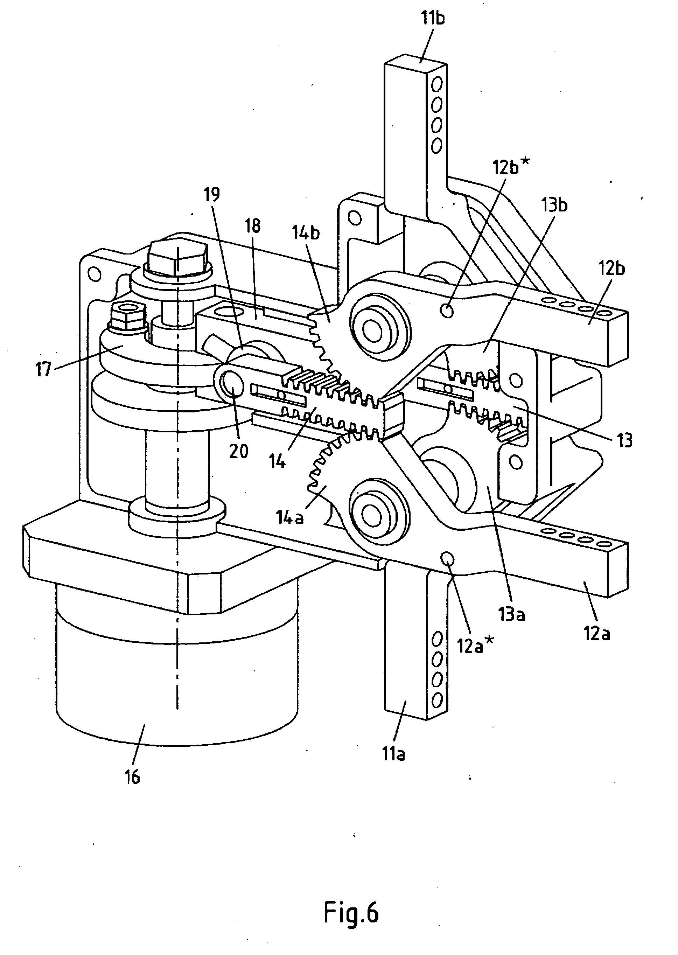

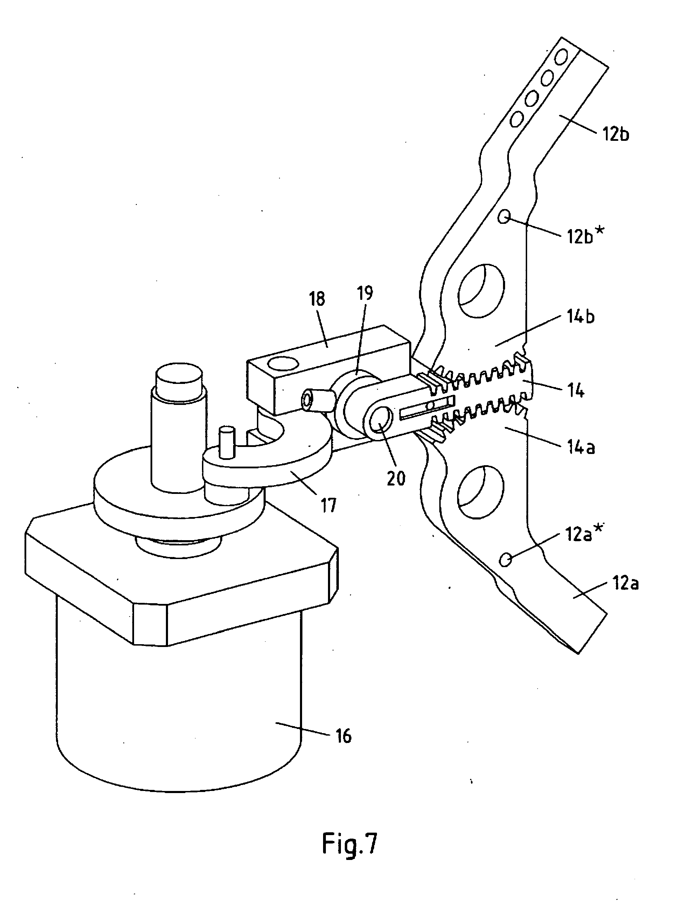

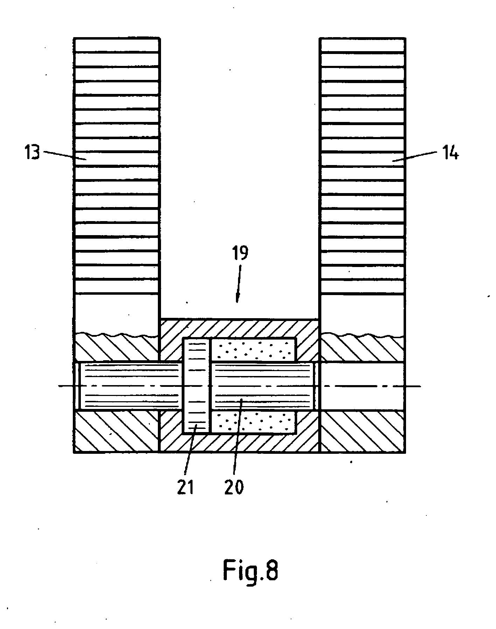

Sämtliche Spannvorrichtungen 7, 8 des Greifers 3 haben den gleichen Aufbau. Wie Fig. 6 zeigt, weist jede Spannvorrichtung 7, 8 zwei Spannzangen 11, 12 mit jeweils um 90° verschwenkbaren Spannbacken 11a, 11b, 12a, 12b auf. Diese Spannbacken 11a bis 12b sind mit nicht dargestellten Konturstücken bestückbar, die der Kontur des zu greifenden Bauteils angepasst sind. Das Paar Spannbacken 11a, 11b ist z.B. für das Bauteil A, z.B. die vordere Tür 9, bestimmt, während das andere Paar Spannbacken 12a, 12b für das Bauteil B, z.B. die hintere Tür 10, bestimmt ist. Während sich das Paar Spannbacken 12a, 12b in Greifposition befindet, befindet sich das Paar Spannbacken 11a, 11b in Ruheposition, in der es durch Verriegelungsmittel, z.B. eine Kugelrast aus einer federbelasteten Kugel im Gehäuse und einer Ausnehmung in den Spannbacken 11a, 11b, gehalten wird. In Fig. 6 und 8 sind diese Ausnehmungen 12a* und 12b* nur für die Spannbacken 12a, 12b zu sehen. Andere Verriegelungsmittel pneumatischer, hydraulischer, elektromagnetischer Art oder Kombinationen daraus sind möglich. Für die 90°-Verschwenkung der beiden Paare Spannbacken 11a, 11b, 12a, 12b dient jeweils eine Zahnstange 13, 14, die mit Zahnsegmenten 14a, 14b, 15a, 15b der verschwenkbaren Spannbacken 11a, 11b, 12a, 12b kämmt. Die beiden Zahnstangen 13, 14 werden von einem gemeinsamen Antrieb angetrieben, der aus einem Drehzylinder 16 und einem Kurbelschwingengetriebe 17 besteht. Um die beiden Zahnstangen 13, 14 wechselweise mit dem Kurbelschwingengetriebe 17 zu kuppeln, ist zwischen den beiden Zahnstangen 13, 14 ein in Fig. 7 und 8 dargestellter, mit der Kurbel des Kurbelschwingengetriebes 17 gekuppelter Mitnehmer 18 mit einem als eine doppelseitig beaufschlagbare Zylinder-Kolben-Anordnung ausgebildeten, ansteuerbaren Kupplungselement 19 angeordnet. Das ansteuerbare Kupplungselement 19 ermöglicht es, mit Zapfen 20 seines Kolbens 21 entweder die Zahnstange 13 oder die Zahnstange 14 an die Kurbel des Kurbelschwingengetriebes 17 zu kuppeln. Da bei der Spannvorrichtung 7, 8 somit gewährleistet werden kann, dass bei in Greifposition befindlichen Spannbacken 12a, 12b die Spannbacken 11a, 11b in Ruheposition sich befinden und damit nicht in deren Bewegungsweg liegen, kann das Bauteil problemlos erfasst werden. Soll das andere Bauteil erfasst werden, dann werden die Spannbacken 12a, 12b um 90° in die Ruheposition zurückgeschwenkt, während die Spannbacken 11a, 11b in die Greifposition verschwenkt werden. Das bedeutet, dass mit ein und derselben Spannvorrichtung 7, 8 formverwandte Bauteile an den deckungsgleichen Bereichen erfasst werden können, ohne dass die für das eine Bauteil vorgesehenen Spannbacken das Erfassen des anderen Bauteils durch die anderen Spannbacken behindern und umgekehrt.

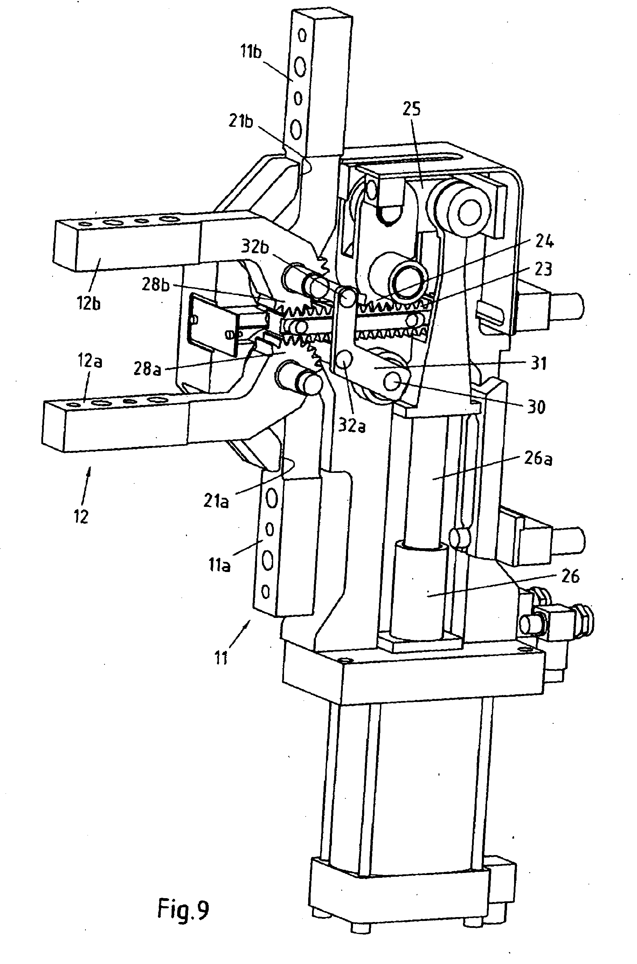

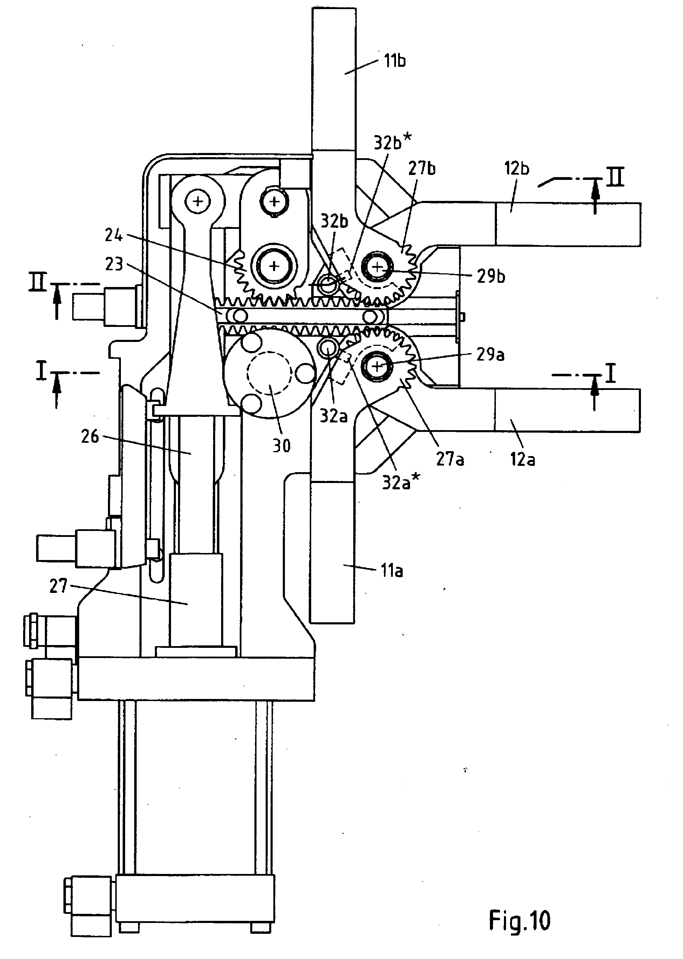

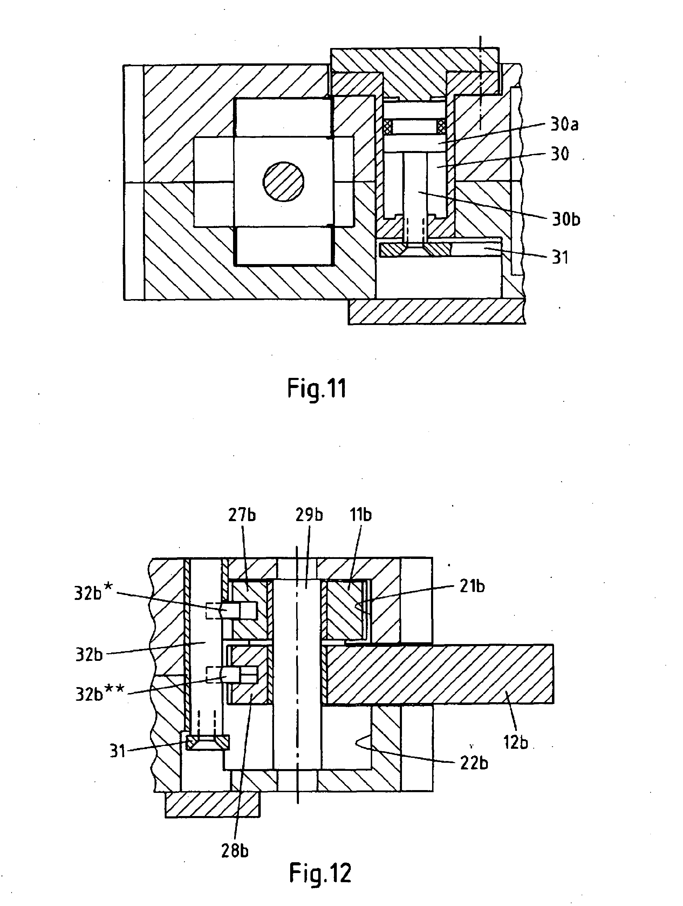

Wie beim beschriebenen ersten Ausführungsbeispiel der Figuren 6 bis 8, haben auch beim zweiten Ausführungsbeispiel der Figuren 9 bis 12 sämtliche Spannvorrichtungen 7, 8 des Greifers 3 den gleichen Aufbau. Unterschiedlich ist jedoch der Antrieb ihrer Spannbacken 11a, 11b, 12a, 12b und ihre Verriegelung in der Parkposition. Während sich das Paar Spannbacken 12a, 12b in Greifposition befindet, befindet sich das Paar Spannbacken 11a, 11b in Parkposition, in der es bei dem zweiten Ausführungsbeispiel durch seitliche Haltetaschen 21a, 21b, 22b gehalten wird.

Zum Verschwenken der Spannbacken 11a, 11b, 12a, 12b einer jeden Spannzange 11, 12 dient eine beidseitig verzahnte Zahnstange 23, die über ein Ritzel 24 und einen damit gekuppelten Kniehebel 25 mit einer Kolbenstange 26a einer Zylinder-Kolben-Anordnung 26 antriebsmäßig verbunden ist. Diese Zahnstange 23 dient den Spannbacken 11a, 11b, 12a, 12b beider Spannzangen 11, 12 als Antrieb. Anders als beim Hauptpatent können die Spannzangen 11, 12 abwechselnd mit den Antriebsritzeln 27a, 27b, 28a, 28b) ihrer Spannbacken 11a, 11b, 12a, 12b mit der Zahnstange 23 in Eingriff gebracht werden. Dafür sind die auf ihren Lagerzapfen 29a, 29b verschwenkbar gelagerten Spannbacken 11a, 11b, 12a, 12b auf diesen Lagerzapfen 29a, 29b auch axial verschiebbar. Für die gemeinsame axiale Verschiebung der Spannbacken 11a, 11b, 12a, 12b ist ein pneumatischer Antrieb vorgesehen, der eine Zylinder-Kolben-Anordnung 30 mit einem beidseitig beaufschlagbaren Kolben 30a und eine Kolbenstange 30b aufweist, die über ein Querhaupt 31 mit zwei axial verschiebbaren Zapfen 32a, 32b gekuppelt ist. Jeder Zapfen 32a, 32b weist als Mitnehmer zwei Stifte 32b*, 32b**, 32a* auf, die in Ringnuten der Antriebsritzel 27a, 27b, 28a der Spannbacken 11a, 11b, 12a, 12b eingreifen.

Die Umstellung der Spannbacken 11a, 11b, 12a, 12b erfolgt auf folgende Art und Weise: Alle Spannbacken 11a, 11b, 12a, 12b befinden sich in der geöffneten Stellung. In dieser Stellung lässt sich das in den Haltetaschen 21a, 21b in der seitlichen Parkposition befindliche Paar Spannbacken 11a,11b in die Mittelposition, die Betriebsposition, verstellen, während das andere Paar Spannbacken 12a, 12b in die anderen seitlichen Haltetaschen 21a, 22b in Parkposition überführt und hier sicher gehalten werden kann. Bei dieser Umstellung wird das erste Paar Spannbacken 11a, 11b mit seinen Antriebsritzeln 27a, 27b in Eingriff mit der Zahnstange 23 gebracht, während das andere Paar Spannbacken 12a, 12b mit seinen Antriebsritzeln 28a, 28b außer Eingriff mit der Zahnstange 23 gebracht wird. Das so in mittlerer Position, also in Betriebsstellung gebrachte Paar Spannbacken 11a, 11b kann nun durch die Zahnstange 23 verschwenkt werden, wobei es seitlich durch vom Gehäuse gebildete Führungsflanken geführt wird, während das andere Paar Spannbacken 12a, 12b formschlüssig in den zugeordneten Haltetaschen 22b gehalten wird.

## Patentansprüche

1. Handlingsystem für formverwandte Bauteile, insbesondere Karosseriebauteile für Kraftfahrzeuge, bei dem ein Greifer (3) am Arm (2) eines Roboters (1) mit mehreren, den Bauteilen angepasste Konturstücke aufweisenden Spannvorrichtungen (7, 8) bestückt ist, mit denen das jeweilige Bauteil an räumlich gegeneinander versetzten Bereichen greifbar ist, **dadurch gekennzeichnet, dass** jede Spannvorrichtung (7, 8) zwei Spannzangen aufweist, deren Spannbacken (11a, 11b, 12a, 12b) aus einer Ruheposition in eine Greifposition verschwenkbar sind, wobei die Spannbacken (11a, 11b) der einen Spannzange in ihrer Ruheposition gehalten werden, wenn die Spannbacken (12a, 12b) der anderen Spannzange in ihre Greifposition verschwenkt werden und umgekehrt.

2. Handlingsystem nach Anspruch 1, **dadurch gekennzeichnet, dass** die Spannvorrichtungen (7, 8) von Tragarmen (5, 6) gehalten sind.

3. Handlingsystem nach Anspruch 1 oder 2, **dadurch gekennzeichnet, dass** die Spannzangen (11, 12) einer jeden Spannvorrichtung (7, 8) jeweils einen Zahnstangen (13, 14) umfassenden Antrieb aufweisen.

4. Handlingsystem nach Anspruch 3, **dadurch gekennzeichnet, dass** die Zahnstangen (13, 14) von zwei nebeneinander angeordneten Spannzangen derselben Spannvorrichtung (7, 8) abwechselnd an denselben Mitnehmer (18) des Antriebes (16, 17, 18) kuppelbar sind.

5. Handlingsystem nach Anspruch 4, **dadurch gekennzeichnet, dass** der Mitnehmer (18) Teil eines Kurbelschwingengetriebes (17) ist.

6. Handlingsystem nach einem der Ansprüche 1 bis 2, **dadurch gekennzeichnet, dass** die Spannbacken (11a, 11b, 12a, 12b) der beiden Spannzangen (11, 12) auf gemeinsamen Lagerzapfen (29a, 29b) verschwenk- und axial verschiebbar sind und mit Antriebsritzeln (27a, 27b)abwechselnd an eine gemeinsame, angetriebene Zahnstange (23) kuppelbar sind.

7. Handlingsystem nach Anspruch 6, **dadurch gekennzeichnet, dass** die Spannbacken (11a, 11b, 12a, 12b) an einem gemeinsamen Verschiebeantrieb (30, 30a, 30b, 32a, 32b) gekuppelt sind.

8. Handlingsystem nach Anspruch 7, **dadurch gekennzeichnet, dass** der Verschiebeantrieb (30, 30a, 30b, 32a, 32b) ein parallel zum Lagerzapfen (29a, 29b) verschiebbar gelagertes und von einem Stellmotor (30) angetriebenes Stellglied (31) aufweist, das über Mitnehmer (32a*, 32b*, 32b**) mit den Spannbacken (11a, 11b, 12a, 12b) verbunden ist.

9. Handlingsystem nach Anspruch 8, **dadurch gekennzeichnet, dass** der Stellmotor (30) eine beidseitig mit einem Druckmittel beaufschlagbare Zylinderkolbenanordnung ist, an dessen Kolbenstange (30b) das Stellglied (31) angeschlossen ist.

10. Handlingsystem nach Anspruch 8 oder 9, **dadurch gekennzeichnet, dass** die Mitnehmer (32a*, 32b*, 32b**) Stifte sind, die in koaxialen Ringnuten (33, 34) der Antriebsritzel (27a, 27b) eingreifen.

11. Handlingsystem nach einem der Ansprüche 6 bis 10, **dadurch gekennzeichnet, dass** für die Spannbacken (11a, 11b, 12a, 12b) einer jeden aktiven Spannzange (11, 12), deren Antriebsritzel gerade mit der Zahnstange (23) in Eingriff steht, bei ihrer Verschwenkbewegung wirksame, beidseitige Führungsflanken vorgesehen sind, und dass für die Spannbacken (11a, 11b, 12a, 12b) einer jeden dann inaktiven Spannzange (11, 12), deren Antriebsritzel dann nicht mit der Zahnstange (23) in Eingriff steht, eine seitliche Haltetasche (21a, 21b, 22b) vorgesehen ist.

12. Handlingsystem nach einem der Ansprüche 6 bis 11, **dadurch gekennzeichnet, dass** die Zahnstange (23) über ein Ritzel (24) und einen damit gekuppelten Kniehebel (25) mit der Kolbenstange (26a) einer Zylinderkolbenanordnung (26) antriebsmäßig verbunden ist.

## Claims

1. A handling system for components of similar shape, in particular body components for motor vehicles, in which a gripper (3) on the arm (2) of a robot (1) is equipped with a plurality of clamping devices (7, 8), which have contoured sections which are matched to the components and with which clamping devices the respective component can be gripped in regions which are spatially offset with respect to each other, **characterised in that** each clamping device (7, 8) has two collets whose chuck jaws (11a, 11b, 12a, 12b) can be pivoted from a rest position into a gripping position, with the chuck jaws (11a, 11b) of one collet being held in their rest position when the chuck jaws (12a, 12b) of the other collet are pivoted into their gripping position and vice versa.

2. The handling system according to Claim 1, **characterised in that** the clamping devices (7, 8) are held by support arms (5, 6).

3. The handling system according to Claim 1 or 2, **characterised in that** the collets (11, 12) of each clamping device (7, 8) have a drive which comprises toothed racks (13, 14) in each case.

4. The handling system according to Claim 3, **characterised in that** the toothed racks (13, 14) can be coupled alternately to the same driver (18) of the drive (16, 17, 18) by two adjacently arranged collets of the same clamping device (7, 8).

5. The handling system according to Claim 4, **characterised in that** the driver (18) is part of a crank-rocker mechanism (17).

6. The handling system according to one of Claims 1 to 2, **characterised in that** the chuck jaws (11a, 11b, 12a, 12b) of the two collets (11, 12) can be pivoted and axially displaced on common bearing journals (29a, 29b) and can be coupled alternately with drive pinions (27a, 27b) to a common, driven toothed rack (23).

7. The handling system according to Claim 6, **characterised in that** the chuck jaws (11a, 11b, 12a, 12b) are coupled to a common displacement drive (30, 30a, 30b, 32a, 32b).

8. The handling system according to Claim 7, **characterised in that** the displacement drive (30, 30a, 30b, 32a, 32b) has an actuating member (31), which is mounted in a displaceable manner parallel to the bearing journal (29a, 29b), driven by an actuator (30) and which is connected by means of drivers (32a*, 32b*, 32b**) to the chuck jaws (11a, 11b, 12a, 12b).

9. The handling system according to Claim 8, **characterised in that** the actuator (30) is a cylinder piston arrangement to which pressure medium can be applied from both sides and to the piston rod (30b) of which the actuating member (31) is connected.

10. The handling system according to Claim 8 or 9, **characterised in that** the drivers (32a*, 32b*, 32b**) are pins which engage in coaxial annular grooves (33, 34) of the drive pinions (27a, 27b).

11. The handling system according to one of Claims 6 to 10, **characterised in that**, for the chuck jaws (11a, 11b, 12a, 12b) of each active collet (11, 12), the drive pinion of which is currently engaged with the toothed rack (23), guide flanks are provided on both sides, which are active during their pivoting movement, and that for the chuck jaws (11a, 11b, 12a, 12b) of each inactive collet (11, 12), the drive pinion of which is not engaged with the toothed rack (23), a lateral pocket (21a, 21b, 22b) is provided.

12. The handling system according to one of Claims 6 to 11, **characterised in that** the toothed rack (23) is drivingly connected via a pinion (24) and a toggle lever (25) coupled thereto to the piston rod (26a) of a cylinder piston arrangement (26).

## Revendications

1. Système de manutention pour des éléments de forme apparentée, en particulier pour des composants de carrosserie pour des véhicules automobiles, dans lequel une pince (3) d'un bras (2) de robot (1) est équipée de plusieurs dispositifs de serrage (7, 8), qui présente des pièces de contour adaptées aux éléments, avec lesquels le composant concerné peut être saisi dans des zones décalées les unes par rapport aux autres, **caractérisé en ce que** chaque dispositif de serrage (7, 8) présente deux pinces de serrage, dont les mâchoires de serrage (11a, 11b) peuvent être pivotées d'une position de repos à une position de préhension, sachant que les mâchoires de serrage (11a, 11b, 12a, 12b) de l'une des pinces de serrage sont maintenues dans leur position de repos quand les mâchoires de serrage (12a, 12b) de l'autre pince de serrage sont pivotées dans leur position de préhension, et inversement.

2. Système de manutention selon la revendication 1, **caractérisé en ce que** les dispositifs de serrage (7, 8) sont portés par des bras de support (5, 6).

3. Système de manutention selon revendication 1 ou 2, **caractérisé en ce que** les mâchoires de serrage (11, 12) de chacun des dispositifs de serrage (7, 8) présentent respectivement un système d'entraînement, qui comprend des crémaillères (13, 14).

4. Système de manutention selon la revendication 3, **caractérisé en ce que** les crémaillères (13, 14) de deux pinces de serrage du même dispositif de serrage (7, 8), disposées l'une à côté de l'autre, peuvent être couplées alternativement avec le même entraîneur (18) du système d'entraînement (16, 17, 18).

5. Système de manutention selon la revendication 4, **caractérisé en ce que** l'entraîneur (18) fait partie d'un mécanisme oscillant à bielle (17)

6. Système de manutention selon l'une des revendications 1 à 2, **caractérisé en ce que** les mâchoires de serrage (11a, 11b, 12a, 12b) des deux pinces de serrage (11, 12) peuvent être pivotées et déplacées axialement sur un tourillon commun (29a, 29b) et peuvent être couplées alternativement, au moyen de pignons d'entraînement (27a, 27b), à une crémaillère commandée, commune (23).

7. Système de manutention selon la revendication 6, **caractérisé en ce que** les mâchoires de serrage (11a, 11b, 12a, 12b) sont couplées à un mécanisme de déplacement commun (30, 30a, 30b, 32a, 32b).

8. Système de manutention selon la revendication 7, **caractérisé en ce que** le mécanisme de déplacement (30, 30a, 30b, 32a, 32b) présente un organe d'actionnement (31), qui, déplaçable parallèlement au tourillon (29a, 29b) et entraîné par un moteur de commande (30), est relié aux mâchoires de serrage (11a, 11b, 12a, 12b) par des entraîneurs (32a*, 32b*, 32b**).

9. Système de manutention selon la revendication 8, **caractérisé en ce que** le moteur de commande (30) est un système de vérin à piston, à la tige de piston (30b) duquel l'organe de réglage (31) est raccordé.

10. Système de manutention selon revendication 8 ou 9, **caractérisé en ce que** les entraîneurs (32a*, 32b*, 32b**) sont des broches, qui s'engagent dans des rainures annulaires, coaxiales (33, 34) des pignons d'entraînement (27a, 27b).

11. Système de manutention selon l'une des revendications 6 à 10, **caractérisé en ce que**, pour les mâchoires de serrage (11a, 11b, 12a, 12b) de chaque pince de serrage (11, 12) active, dont le pignon d'entraînement se trouve alors en prise avec la crémaillère (23), sont prévus des flancs de guidage bilatéraux, actifs lors de leur pivotement, et que, pour les mâchoires de serrage (11a, 11b, 12a, 12b) de chaque pince de serrage (11, 12) alors inactive, dont le pignon d'entraînement ne se trouve pas en prise avec la crémaillère (23), est prévu un dégagement d'arrêt (21a, 21b, 22n) latéral.

12. Système de manutention selon l'une des revendications 6 à 11, **caractérisé en ce que** la crémaillère (23) est reliée à entraînement à la tige de piston (26a) d'un système de vérin à piston (26), par l'intermédiaire d'un pignon (24) et d'un levier à genouillère (25), qui est couplé avec celui-ci.
